# EUROPEAN PATENT SPECIFICATION

(11) **EP 2 774 835 B1**
(45) Date of publication and mention of the grant of the patent: **27.12.2017**
(21) Application number: 12845572.2
(22) Date of filing: 20.09.2012
(51) Int. Cl.: B62M 6/65

(54) **ELECTRIC VEHICLE HUB DEVICE, AND ELECTRIC BICYCLE**
NABENVORRICHTUNG FÜR EIN ELEKTROFAHRZEUG UND ELEKTROFAHRRAD DAMIT
DISPOSITIF DE MOYEU POUR VÉHICULE ÉLECTRIQUE, ET BICYCLETTE ÉLECTRIQUE

(30) Priority: 31.10.2011 JP 2011238097
(43) Date of publication of application: 10.09.2014
(73) Proprietor: Panasonic Corporation, Osaka 571-8501 (JP)
(72) Inventor: ADACHI, Ryohei, Osaka 540-6207 (JP); FUJII, Naoki, Osaka 540-6207 (JP); NISHIMORI, Masato, Osaka 540-6207 (JP)
(74) Representative: Grünecker Patent- und Rechtsanwälte PartG mbB
(86) International application number: PCT/JP2012/005956
(87) International publication number: WO 2013/065227

(56) References cited:
- EP-A2- 0 980 821
- EP-A2- 1 298 051
- JP-A- 2009 012 627
- JP-A- 2009 012 627

## Description

### Technical Field

The present invention relates to an electric vehicle hub device having a clutch in a hub case, and an electric bicycle including such an electric vehicle hub device. Such a hub device is known from closest prior art EP 1 298 051A for example.

This document discloses the following features of claim 1: a hub device with a clutch for an electric vehicle comprising: a hub case provided at a center of a wheel so as to rotate with the wheel and supported by a fixed axle via a bearing member , the hub case accommodating an electric motor that rotates the hub case, an internal rotating member rotatable with the hub case about an axis,a decelerator that reduces a rotational speed of an output shaft of the electric motor and transmits a rotation of the output shaft to the internal rotating member, and a one-way clutch that transmits a rotation of the internal rotating member to the hub case but does not transmit a rotation of the hub case to the internal rotating member, wherein the internal rotating member includes an annular internal gear and a gear holder, the annular internal gear being detachably attached to the gear holder, wherein the gear holder is rotatably supported by the fixed axle via the bearing member that supports the hub case, the decelerator includes a sun gear rotated by the output shaft of the electric motor, and a planetary gear engaged with the sun gear and the internal gear, the one-way clutch includes a first engaging member provided on an outer periphery of the internal gear and a second engaging member provided in the hub case, the second engaging member is disposed so as to surround the internal gear from outside in a radial direction, and the first engaging member is engaged with the second engaging member in one rotation direction of transmitting the rotation of the internal rotating member to the hub case but is not engaged with the second engaging member in an opposite rotation direction from the one rotation direction.

### Background Art

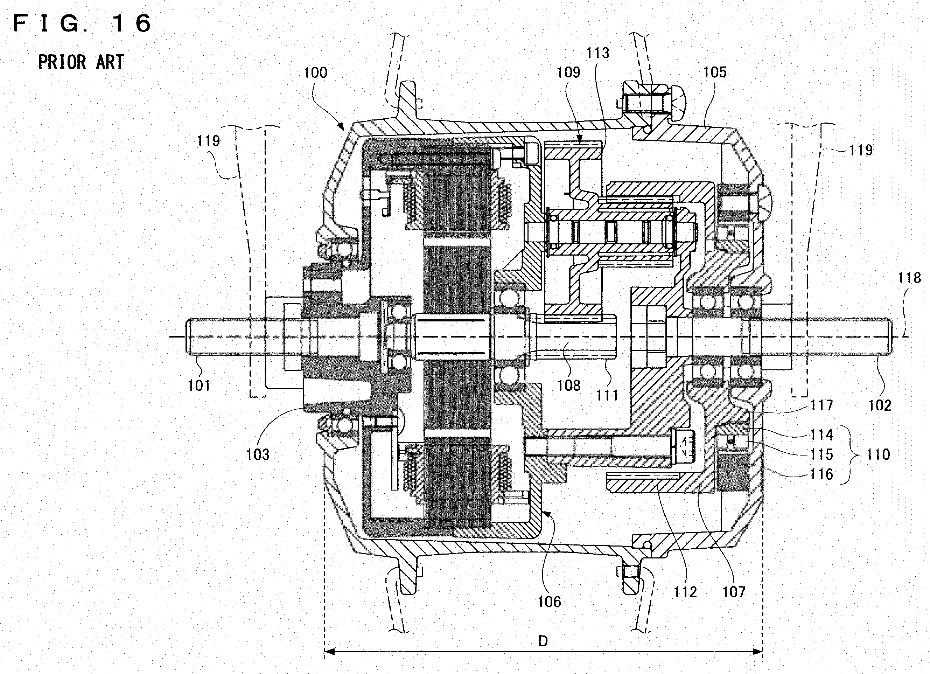

FIG. 16 shows a conventional electric vehicle hub device provided in, for example, an electric bicycle. A hub device 100 includes a pair of right and left fixed axles 101 and 102 that are connected and fixed to fork blades 119 on a front fork, a fixing member 103 provided on the fixed axle 101, and a hub case 105 provided at the center of a front wheel (not shown) so as to rotate with respect to the fixing member 103.

The hub case 105 accommodates a motor 106 that rotates the hub case 105, a rotating member 107 rotatable with the hub case 105 about an axis, a decelerator 109 that reduces the rotational speed of an output shaft 108 on the motor 106 and transmits the rotation of the output shaft 108 to the rotating member 107, and a one-way clutch 110.

### REPLACEMENT DESCRIPTION PAGE

The decelerator 109 includes a sun gear 111 rotated by the output shaft 108 of the motor 106, an annular internal gear 112 provided on the rotating member 107, and a planetary gear 113 engaged with the sun gear 111 and the internal gear 112.

The one-way clutch 110 transmits the rotation of the rotating member 107 from the rotating member 107 to the hub case 105 and has the switching function of avoiding transmission of the rotation of the hub case 105 from the hub case 105 to the rotating member 107. Specifically, the one-way clutch 110 includes a pawl support ring 114, a ratchet pawl 115 attached to the pawl support ring 114, and an annular ratchet gear 116 provided inside the hub case 105. The rotating member 107 has an external threaded shaft 117 that protrudes outward on the opposite side from the internal gear 112. The pawl support ring 114 is threaded onto the external threaded shaft 117 so as to be attached to the rotating member 107. The ratchet pawl 115 is engaged with the ratchet gear 116 in one rotation direction of transmitting the rotation of the rotating member 107 to the hub case 105 but is not engaged with the ratchet gear 116 in the opposite rotation direction from the one rotation direction.

The electric vehicle hub device 100 configured thus is described in Patent Literature 1.

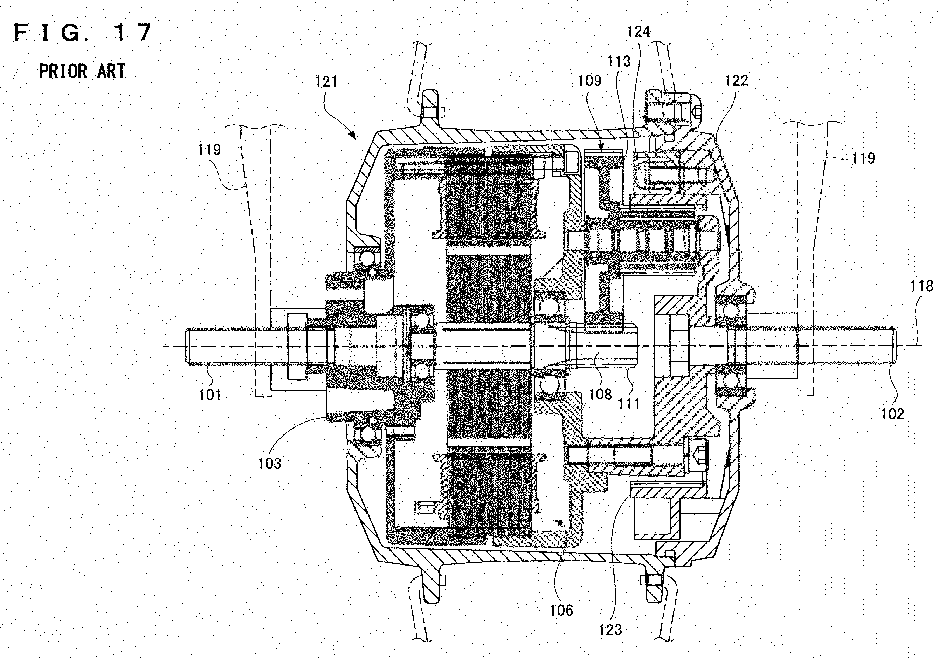

In addition to the electric vehicle hub device 100 including the one-way clutch 110 shown in FIG. 16 (hereinafter, will be called the clutch hub device 100), an electric vehicle hub device 121 not including the one-way clutch 110 is available as shown in FIG. 17 (hereinafter, will be called a clutch-free hub device 121).

In the clutch-free hub device 121, an internal gear 123 is connected and fixed to the interior of a hub case 122 with a plurality of screws 124.

### Citation List

### Patent Literature

### Patent Literature 1: Japanese Patent Laid-Open No. 2009-12627

### Summary of Invention

### Technical Problem

In the conventional clutch hub device 100 shown in FIG. 16, however, the position of the internal gear 112 and the position of the one-way clutch 110 are displaced from each other in the direction of a rotation axis 118, increasing a width D of the hub case 105. Thus, the electric vehicle hub device 100 disadvantageously has a large size.

In the related art, the hub case 105 and the internal gear 112 of the clutch hub device 100 in FIG. 16 is quite different in shape and dimension from the hub case 122 and the internal gear 123 of the clutch-free hub device 121 shown in FIG. 17. Hence, it is difficult to apply the hub case 105 and the internal gear 112 of the clutch hub device 100 in FIG. 16 to the hub case 122 and the internal gear 123 of the clutch-free hub device 121 shown in FIG. 17.

An object of the present invention is to provide an electric vehicle hub device and an electric bicycle that can shorten the width of a hub case.

### Solution to Problem

In order to attain the object, a first aspect is a hub device with clutch for an electric vehicle according to claim 1.

With this configuration, the positions of the internal gear and the one-way clutch overlap each other in the radial direction. Thus, the internal gear and the one-way clutch are located substantially at the same position along a rotation axis, thereby reducing the width of the hub case. The hub case and the internal gear of the clutch hub device can be used for a clutch-free hub device.

When the electric motor is driven, the rotation of the output shaft is reduced by the decelerator and is transmitted to the internal rotating member, rotating the internal rotating member. At this point, the first engaging member of the one-way clutch is engaged with the second engaging member. This connects the internal rotating member and the hub case via the one-way clutch, transmits the rotation of the internal rotating member to the hub case via the one-way clutch, and rotates the hub case. Thus, a rotating force outputted from the electric motor is applied to the wheel.

If the wheel is rotated while the electric motor is stopped, the hub case rotates together with the wheel while the second engaging member of the one-way clutch rotates together with the hub case. At this point, the first engaging member is not engaged with the second engaging member, disconnecting the internal rotating member and the hub case via the one-way clutch. Thus, the rotation of the hub case is not transmitted to the internal rotating member. This does not rotate the internal rotating member, applying no rotating force to the output shaft of the electric motor from the outside. Hence, an increase in pedal force to pedals can be prevented when the electric motor is stopped during the riding of an electric vehicle.

A clutch electric vehicle hub device according to a second aspect, wherein the first engaging member is a ratchet pawl, and the second engaging member is an annular ratchet gear.

With this configuration, when the electric motor is driven, the ratchet pawl of the one-way clutch is engaged with the ratchet gear.

If the wheel rotates while the electric motor is stopped, the ratchet gear of the one-way clutch rotates together with the hub case. At this point, the ratchet pawl is not engaged with the ratchet gear, disconnecting the internal rotating member and the hub case via the one-way clutch.

A third aspect is an electric bicycle including the hub device according to any one of the first or second aspects.

### Advantageous Effects of Invention

As has been discussed, the present invention can shorten the width of a hub case, reducing the size of an electric vehicle hub device.

### Brief Description of Drawings

[FIG. 1] FIG. 1 is a side view of an electric bicycle according to an embodiment of the present invention.
[FIG. 2] FIG. 2 is a cross-sectional view of a clutch hub device for the electric bicycle.
[FIG. 3] FIG. 3 is an exploded cross-sectional view showing the case body and case lid of a hub case and a ratchet gear of the clutch hub device.
[FIG. 4] FIG. 4 is an assembly perspective view of the internal rotating member of the clutch hub device.
[FIG. 5] FIG. 5 is an assembly perspective view showing the internal rotating member and one-way clutch of the clutch hub device.
[FIG. 6] FIG. 6 illustrates the internal rotating member, one-way clutch, and case lid of the clutch hub device from the inside of the hub case.
[FIG. 7] FIG. 7 is a perspective view of a ratchet pawl and a pawl attachment portion of the clutch hub device.
[FIG. 8] FIG. 8 is a partially cut view illustrating the internal gear of the internal rotating member of the clutch hub device in a radial direction.
[FIG. 9] FIG. 9 is a cross-sectional view taken along the line X-X of FIG. 8.
[FIG. 10] FIG. 10 is a perspective view of the ratchet gear of the clutch hub device.
[FIG. 11] FIG. 11 is a cross-sectional view taken along the line X-X of FIG. 3.
[FIG. 12] FIG. 12 is a cross-sectional view of a clutch-free hub device for the electric bicycle (not claimed).
[FIG. 13] FIG. 13 is an exploded cross-sectional view showing the case lid, internal gear, and attaching member of the clutch-free hub device.
[FIG. 14] FIG. 14 is a cross-sectional view taken along the line X-X of FIG. 13.
[FIG. 15] FIG. 15 illustrates the internal gear, attaching member, and case lid of the clutch-free hub device from the inside of the hub case.
[FIG. 16] FIG. 16 is a cross-sectional view showing a clutch hub device for a conventional electric bicycle.
[FIG. 17] FIG. 17 is a cross-sectional view showing a clutch-free hub device for the conventional electric bicycle.

### Description of Embodiment

An embodiment of the present invention will be described below with reference to the accompanying drawings.

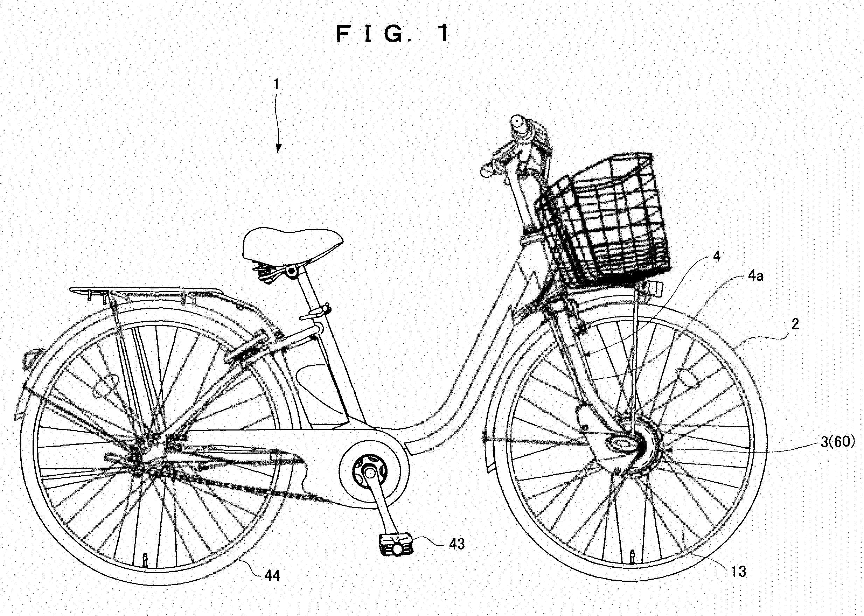

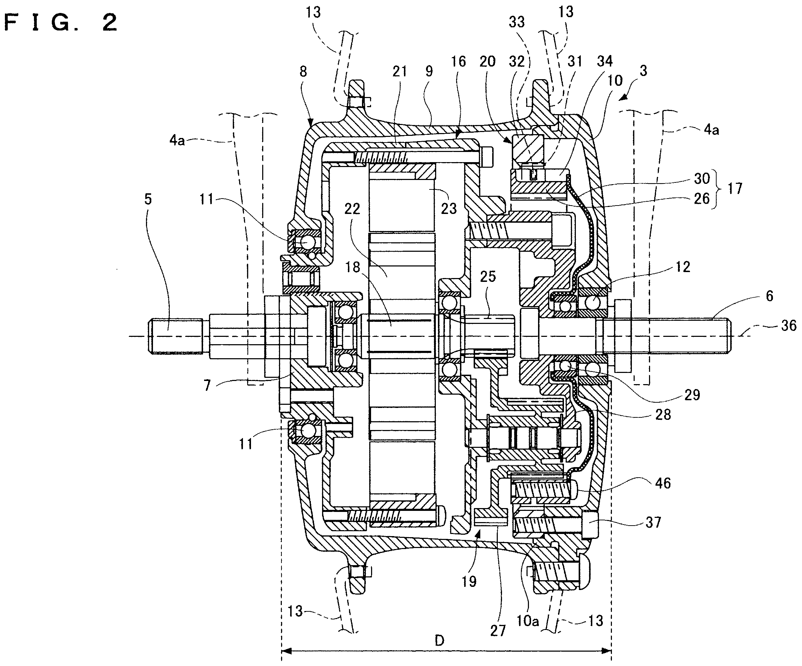

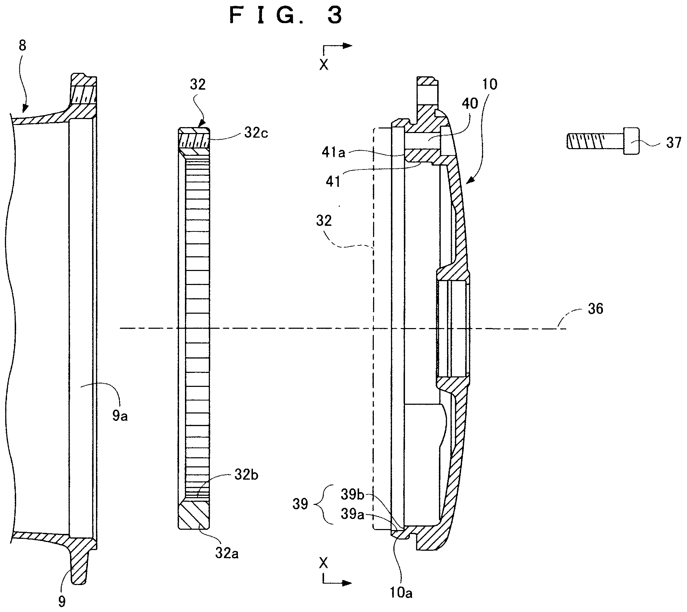

As shown in FIG. 1, reference numeral 1 denotes an electric bicycle, an example of an electric vehicle. The electric bicycle 1 includes a front wheel 2, a rear wheel 44, and pedals 43. An electric vehicle hub device 3 is provided at the center of the front wheel 2. As shown in FIG. 2, the electric vehicle hub device 3 includes a pair of right and left fixed axles 5 and 6 that are connected and fixed to two fork blades 4a of a front fork 4, a fixing member 7 provided on the fixed axle 5 of the pair of right and left fixed axles, and a hub case 8 rotatable with respect to the fixing member 7. As shown in FIG. 3, the hub case 8 includes a cylindrical case body 9 having an opening 9a on one side, and a case lid 10 attached to the case body 9 so as to close the opening 9a. As shown in FIG. 2, the case body 9 is rotatably supported by the fixed axle 5 via a bearing member 11. The case lid 10 is rotatably supported by the fixed axle 6 via a bearing member 12. The inner end of a spoke 13 of the front wheel 2 is connected to the outer periphery of the case body 9.

The hub case 8 accommodates an electric motor 16 that rotates the hub case 8 about an axis 36, an internal rotating member 17 that can rotate about the axis with the hub case 8, a decelerator 19 that reduces the rotational speed of an output shaft 18 of the electric motor 16 and transmits the rotation of the output shaft 18 to the internal rotating member 17, and a one-way clutch 20.

The electric motor 16 is a brushless motor including a rotor 22 and a stator 23 in a housing 21. The rotor 22 includes the output shaft 18.

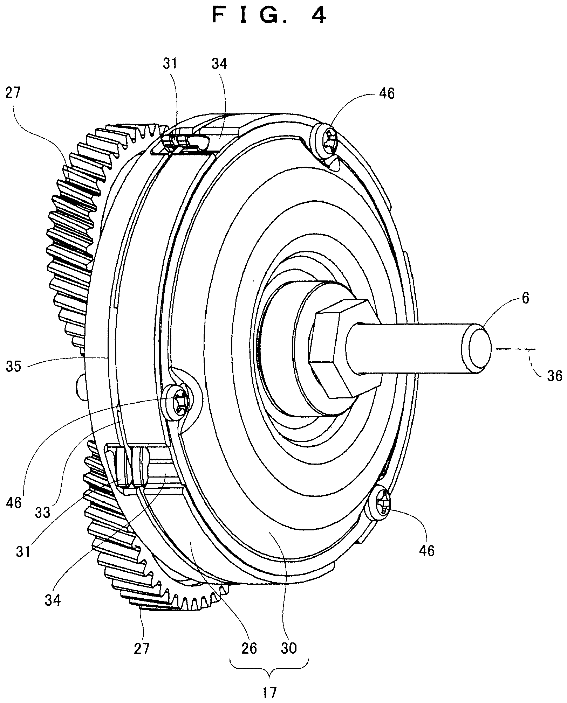

As shown in FIGS. 2 and 4, the internal rotating member 17 includes an annular internal gear 26 and a disk-shaped gear holder 30 having a through hole at the center of the gear holder 30. The internal gear 26 is detachably attached to the gear holder 30 with a plurality of screws 46. The gear holder 30 is rotatably supported by the fixed axle 6 via a bearing member 29.

The decelerator 19 includes a sun gear 25 rotated by the output shaft 18 and a plurality of planetary gears 27 engaged with the sun gear 25 and the internal gear 26. The sun gear 25 is formed on the end of the output shaft 18.

The planetary gear 27 has a large-diameter gear part and a small-diameter gear part and is supported by a support frame 28 provided on the housing 21 of the electric motor 16. The large-diameter gear part of the planetary gear 27 is engaged with the sun gear 25 while the small-diameter gear part of the planetary gear 27 is engaged with the internal gear 26. When the sun gear 25 rotates, the planetary gear 27 rotates on its axis at a fixed position but does not rotate around the sun gear 25.

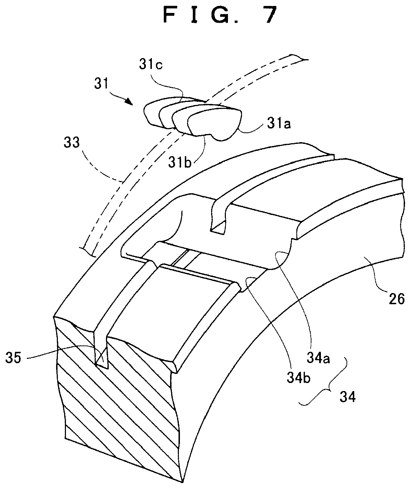

The one-way clutch 20 transmits the rotation of the internal rotating member 17 from the internal rotating member 17 to the hub case 8 and has the switching function of avoiding the transmission of the rotation of the hub case 8 from the hub case 8 to the internal rotating member 17. Specifically, as shown in FIGS. 2, 5, and 6, the one-way clutch 20 includes a plurality of ratchet pawls 31 (an example of a first engaging member) provided on the outer periphery of the internal gear 26, an annular ratchet gear 32 (an example of a second engaging member) provided in the hub case 8, and a ringshaped spring 33 having a cut point. As shown in FIG. 7, the ratchet pawl 31 has an arc-shaped expanded bottom 31a at the proximal end and a flat bottom 31b from the expanded bottom 31a to the end of the ratchet pawl 31. The ratchet pawl 31 has a slit-like notch 31c dividing the pawl 31 into right and left portions except for the expanded bottom 31a.

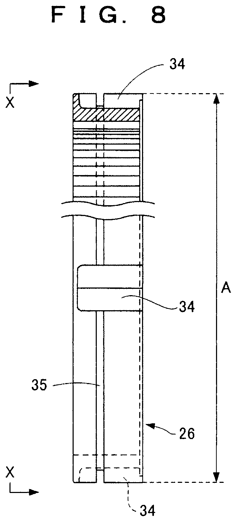

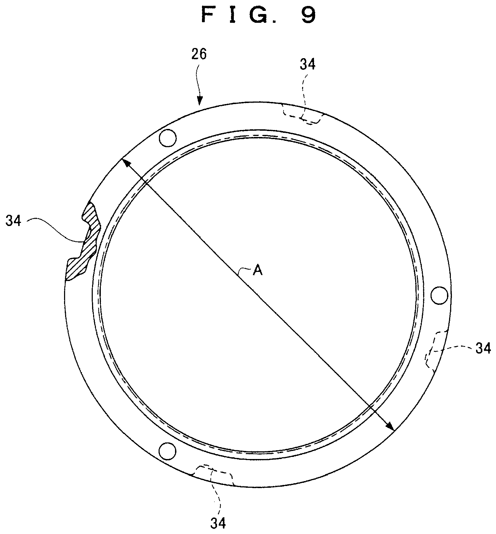

As shown in FIGS. 8 and 9, the internal gear 26 is made of iron and has an outside diameter A. The outer surface of the internal gear 26 has pawl attachment portions 34 and a circumferential groove 35. The pawl attachment portions 34 are formed in the circumferential direction. As shown in FIG. 7, the pawl attachment portion 34 has a curved recess portion 34a and a flat recess portion 34b continuing to the curved recess portion 34a. The expanded bottom 31a of the ratchet pawl 31 is pivotally fit into the curved recess portion 34a of the pawl attachment portion 34 with the flat bottom 31b opposed to the flat recess portion 34b.

The spring 33 is fit into the circumferential groove 35 of the internal gear 26 and the notch 31c of the ratchet pawl 31 so as to fasten the ratchet pawl 31 to the internal gear 26. As shown in FIG. 4, the spring 33 is fastened so as to prevent the ratchet pawl 31 from falling from the pawl attachment portion 34 and urge the end of the ratchet pawl 31 in a rising direction.

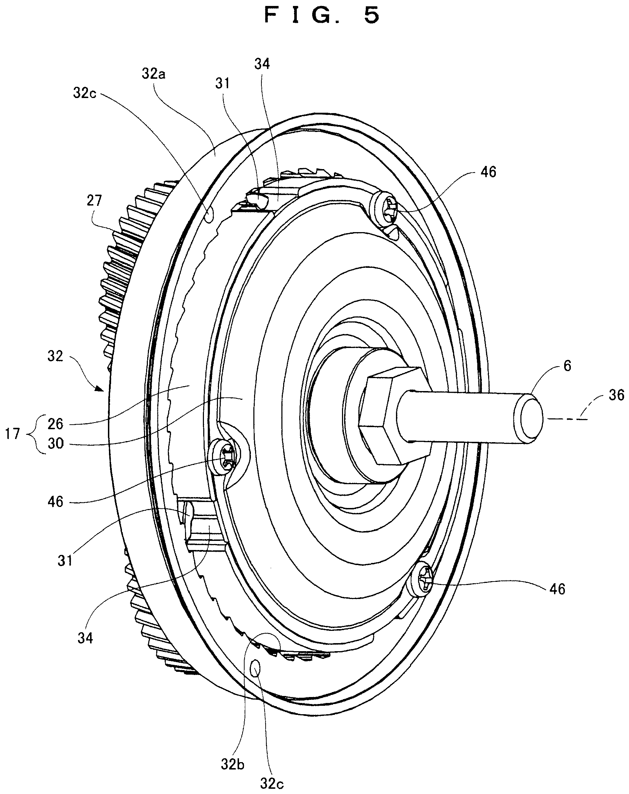

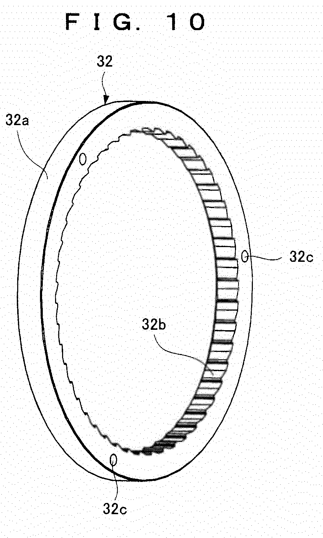

As shown in FIGS. 2, 3, 6, and 10, the ratchet gear 32 is a member having a tooth row 32b on the inner periphery of a ring body 32a. The ratchet gear 32 is fastened and attached to the interior of the case lid 10 with a plurality of screws 37 so as to surround the internal gear 26 in a radial direction from the outside. In other words, as shown in FIG. 5, the internal gear 26 is rotatably inserted into the ratchet gear 32. The ring body 32a includes screw holes 32c that are formed at multiple points in the circumferential direction so as to penetrate the ring body 32a.

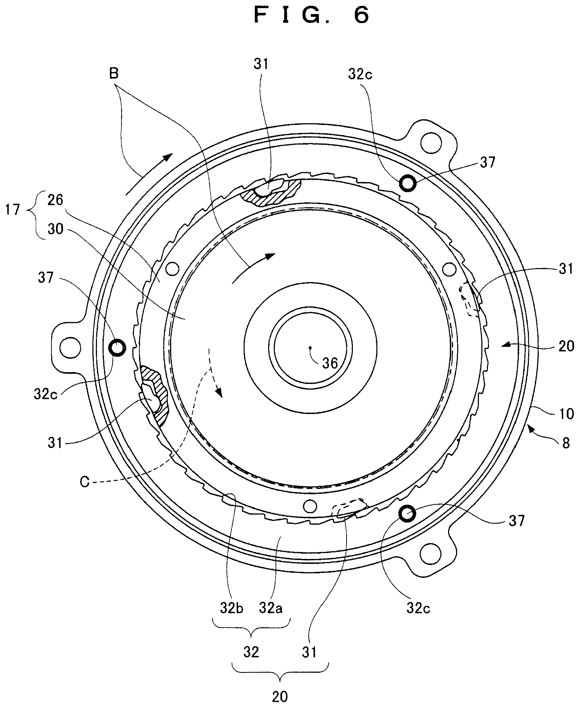

As shown in FIG. 6, the ratchet pawl 31 is engaged with the tooth row 32b of the ratchet gear 32 in one rotation direction B along which the rotation of the internal rotating member 17 is transmitted to the hub case 8, whereas the ratchet pawl 31 is not engaged with the tooth row 32b of the ratchet gear 32 in a rotation direction C opposite from the one rotation direction B.

As shown in FIG. 2, the fixed axles 5 and 6 and the output shaft 18 are disposed on the axis 36. The output shaft 18, the internal rotating member 17, and the hub case 8 rotate about the axis 36.

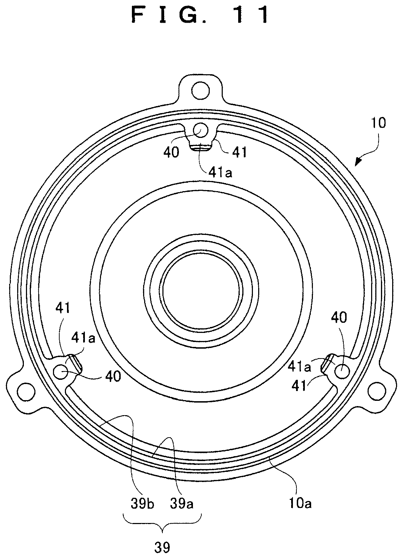

As shown in FIGS. 3 and 11, the case lid 10 has a cylindrical inserted portion 10a inserted into the opening 9a of the case body 9. A fit portion 39 is formed over the inner periphery of the inserted portion 10a, and the ratchet gear 32 is fit to the fit portion 39. The fit portion 39 has a first receiving face 39a that receives the outer surface of the ratchet gear 32 and a second receiving face 39b that receives one end face of the ratchet gear 32 opposed to the second receiving face 39b in the direction of the axis 36. The first receiving face 39a and the second receiving face 39b are orthogonal to each other.

Furthermore, a plurality of ribs 41 having through holes 40 penetrating inward and outward are radially protruded inward from the inner surface of the case lid 10. The screws 37 are inserted into the through holes 40 and are screwed into the screw holes 32c of the ratchet gear 32. The end of the rib 41 has a third receiving face 41a that receives one end face of the ratchet gear 32. The second receiving face 39b and the third receiving face 41a are formed in the same plane so as to be flush with each other.

The effects of the configuration will be described below.

As shown in FIG. 2, the positions of the internal gear 26 and the one-way clutch 20 overlap each other in the radial direction. Thus, the internal gear 26 and the one-way clutch 20 are located substantially at the same position along the axis 36, thereby reducing a width D of the hub case 8.

As indicated by virtual lines in FIGS. 2 and 3, the ratchet gear 32 is fit to the fit portion 39 of the case lid 10 and the first receiving face 39a of the fit portion 39 receives the outer periphery of the ratchet gear 32. This can precisely align the axis of the ratchet gear 32 and the axis of the case lid 10 without radially displacing the ratchet gear 32 with respect to the case lid 10.

Moreover, the one end face of the ratchet gear 32 is received by the second receiving face 39b of the fit portion 39 and the third receiving face 41a of the rib 41. This can precisely attach the ratchet gear 32 to the case lid 10 without inclining the ratchet gear 32 in the direction of the axis 36 with respect to the case lid 10.

When a torque applied to the pedals 43 exceeds a predetermined value during the riding of the bicycle 1, the electric motor 16 is driven to rotate the output shaft 18, the sun gear 25, and the planetary gears 27. As shown in FIG. 6, the internal rotating member 17 rotates in the one rotation direction B with a reduced rotational speed.

At this point, the ratchet pawls 31 of the one-way clutch 20 are engaged with the tooth row 32b of the ratchet gear 32. This connects the internal rotating member 17 and the hub case 8 via the one-way clutch 20, transmits the rotation of the internal rotating member 17 to the hub case 8 via the one-way clutch 20, and rotates the hub case 8 in the one rotation direction B. Thus, a rotating force outputted from the electric motor 16 is applied to the front wheel 2.

During the riding of the electric bicycle 1, if a torque applied to the pedals 43 falls below the predetermined value so as to stop the electric motor 16 in a state in which the front wheel 2 and the rear wheel 44 rotate, the hub case 8 rotates together with the front wheel 2 in the one rotation direction B, and the ratchet gear 32 of the one-way clutch 20 also rotates together with the hub case 8 in the rotation direction B. At this point, the ratchet pawls 31 are not engaged with the tooth row 32b of the ratchet gear 32. Thus, the internal rotating member 17 and the hub case 8 are separated from each other via the one-way clutch 20, preventing the transmission of the rotation of the hub case 8 to the internal rotating member 17. This does not rotate the internal rotating member 17, applying no rotating force to the output shaft 18 of the electric motor 16 from the outside. Hence, an increase in pedal force to the pedals 43 can be prevented when the electric motor 16 is stopped during the riding of the electric bicycle 1.

The electric vehicle hub device 3 in FIGS. 1 to 11 is a clutch hub device 3 including the one-way clutch 20.

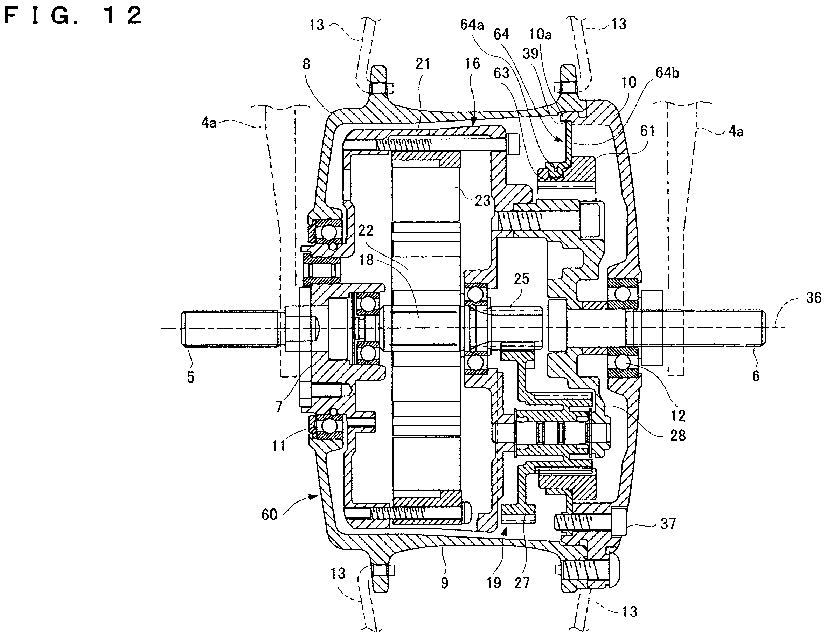

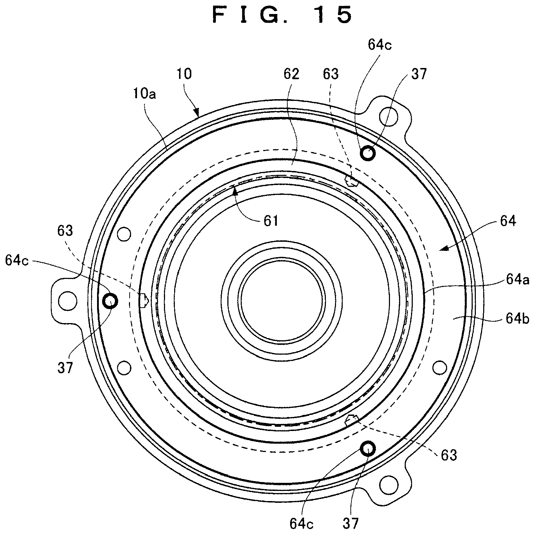

Referring to FIGS. 12 to 15, the configuration of a not claimed clutch-free hub device 60 without the one-way clutch 20 will be described below. The same members as those of the clutch hub device 3 will be indicated by the same reference numerals and the explanation thereof is omitted.

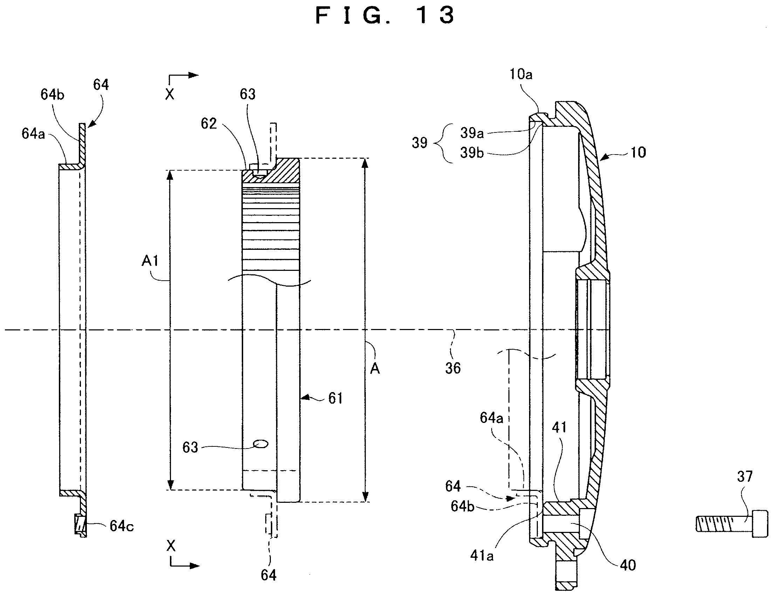

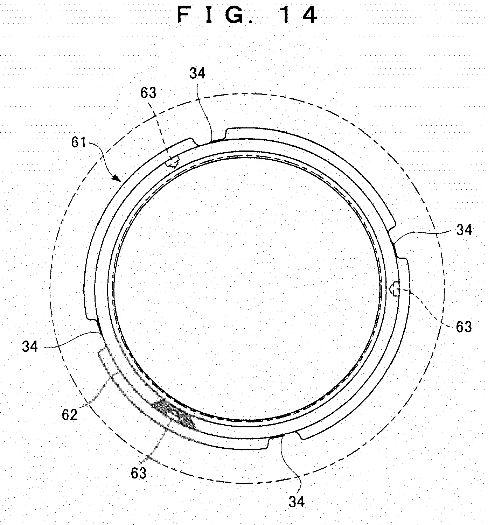

As shown in FIGS. 13 and 14, the clutch-free hub device 60 includes an internal gear 61 having a fit portion 62 with an outside diameter A1 smaller than the outside diameter A of the internal gear 26. The fit portion 62 is formed by cutting the outer periphery of the internal gear 26 (FIG. 8) of the clutch hub device 3. Caulking holes 63 are circumferentially formed at multiple points on the outer surface of the fit portion 62 of the internal gear 61.

As shown in FIGS. 12, 13, and 15, the internal gear 61 is attached to the case lid 10 of the hub case 8 via an attaching member 64. The attaching member 64 has a cylindrical part 64a and a disk part 64b radially extending outward from one end of the cylindrical part 64a. The fit portion 62 of the internal gear 61 is fit into the cylindrical part 64a of the attaching member 64, and the cylindrical part 64a is crimped (caulked) with the holes 63 of the fit portion 62. Thus, as shown in FIG. 12, the internal gear 61 is connected and fixed to the attaching member 64. Screw holes 64c are formed at multiple points in the circumferential direction on the disk part 64b so as to penetrate the disk part 64b.

As shown in FIG. 12, the disk part 64b of the attaching member 64 is fit into the fit portion 39 of the case lid 10. As shown in FIG. 13, the outside diameter of the disk part 64b of the attaching member 64 is smaller than the inside diameter of the fit portion 39 of the case lid 10, and a small clearance is radially formed between the outer surface of the disk part 64b of the attaching member 64 and the first receiving face 39a of the case lid 10. Thus, the attaching member 64 fit into the fit portion 39 can radially shift according to the clearance.

The screws 37 are inserted through the through holes 40 of the case lid 10 and are screwed into the screw holes 64c of the attaching member 64. The attaching member 64 is connected and fixed to the interior of the case lid 10 with the screws 37 so as to rotate together with the hub case 8 about the axis.

Like the clutch hub device 3, as shown in FIG. 12, the hub case 8 of the clutch-free hub device 60 includes the electric motor 16 that rotates the hub case 8 and the decelerator 19 that reduces the rotational speed of the output shaft 18 of the electric motor 16 and transmits the rotation of the output shaft 18 to the hub case 8. The decelerator 19 includes the sun gear 25 rotated by the output shaft 18 and the planetary gear 27 engaged with the sun gear 25 and the internal gear 61.

The effects of the configuration will be described below.

The hub case 8 of the clutch hub device 3 in FIG. 2 (specifically, the case body 9 and the case lid 10) can be used for the hub case 8 of the clutch-free hub device 60 shown in FIG. 12.

As shown in FIG. 13, the outer periphery of the internal gear 26 of the clutch hub device 3 in FIG. 8 is cut into the fit portion 62 to be formed and the holes 63 to be formed on the fit portion 62, the fit portion 62 of the internal gear 61 is fit into the cylindrical part 64a of the attaching member 64, and the cylindrical part 64a is crimped with the holes 63 of the fit portion 62. This integrally connects and fixes the internal gear 61 to the attaching member 64 as shown in FIG. 12.

After that, the disk part 64b of the attaching member 64 is fit into the fit portion 39 of the case lid 10, and then the attaching member 64 is connected and fixed to the interior of the case lid 10 with the screws 37. Thus, the internal gear 61 is attached to the interior of the hub case 8 via the attaching member 64, allowing the internal gear 26 (FIG. 8) of the clutch hub device 3 to be used as the internal gear 61 (FIG. 13) of the clutch-free hub device 60. This can reduce the number of component types and the cost of components.

As indicated by virtual lines in FIGS. 12 and 13, when the disk part 64b of the attaching member 64 is fit into the fit portion 39 of the case lid 10, the small clearance is radially formed between the outer surface of the disk part 64b and the first receiving face 39a of the case lid 10. This can radially shift the attaching member 64 according to the clearance so as to precisely align the axis of the internal gear 61 and the axis of the case lid 10.

Since the second receiving face 39b of the fit portion 39 and the third receiving face 41a of the rib 41 receive the disk part 64b of the attaching member 64, the internal gear 61 is not inclined together with the attaching member 64 in the direction of the axis 36 with respect to the case lid 10, precisely attaching the internal gear 61 to the case lid 10 via the attaching member 64.

When the electric motor 16 is driven to rotate the output shaft 18, the sun gear 25 and the planetary gears 27 are rotated, a rotating force is transmitted from the planetary gears 27 to the internal gear 61 with a reduced rotational speed, and the hub case 8 rotates together with the internal gear 61. Thus, a rotating force outputted from the electric motor 16 is applied to the front wheel 2.

Moreover, the internal gears 26 and 61 made of iron are likely to release heat to the outside, achieving higher heat dissipation. The internal gears 26 and 61 may be made of metals other than iron.

In the present embodiment, as shown in FIG. 1, the clutch electric vehicle hub device 3 or the clutch-free electric vehicle hub device 60 is provided at the center of the front wheel 2. The hub device may be provided at the center of the rear wheel 44.

In the present embodiment, the electric bicycle described as an example of an electric vehicle includes the clutch electric vehicle hub device 3 or the clutch-free electric vehicle hub device 60. The electric bicycle may be replaced with, for example, an electric wheel chair.

## Claims

1. A hub device (3) with clutch for an electric vehicle, comprising:
a hub case (8) provided at a center of a wheel (2) so as to rotate with the wheel (2) and supported by a fixed axle via a bearing member (12),
the hub case (8) accommodating an electric motor (16) that rotates the hub case (8),
an internal rotating member (17) rotatable with the hub case (8) about an axis (36),
a decelerator (19) that reduces a rotational speed of an output shaft (18) of the electric motor (16) and transmits a rotation of the output shaft (18) to the internal rotating member (17), and
a one-way clutch (20) that transmits a rotation of the internal rotating member (17) to the hub case (8) but does not transmit a rotation of the hub case (8) to the internal rotating member (17),
wherein the internal rotating member (17) includes an annular internal gear (26) and a gear holder (30), the annular internal gear (26) being detachably attached to the gear holder (30),
wherein the gear holder (30) being rotatably supported by the fixed axle (6) via an another bearing member (29),
the decelerator (19) includes a sun gear (25) rotated by the output shaft (18) of the electric motor (16), and a planetary gear (27) engaged with the sun gear (25) and the internal gear (26),
the one-way clutch (20) includes a first engaging member (31) provided on an outer periphery of the internal gear (26) and a second engaging member (32) provided in the hub case (8),
the second engaging member (32) is disposed so as to surround the internal gear (26) from outside in a radial direction, and
the first engaging member (31) is engaged with the second engaging member (32) in one rotation direction of transmitting the rotation of the internal rotating member (17) to the hub case (8) but is not engaged with the second engaging member (32) in an opposite rotation direction from the one rotation direction.

2. The hub device (3) with clutch for an electric vehicle according to claim 1, wherein the first engaging member (31) is a ratchet pawl, and
the second engaging member (32) is an annular ratchet gear.

3. An electric bicycle comprising the hub device (3) with clutch according to claims 1 or 2.

## Patentansprüche

1. Nabenvorrichtung (3) mit Kupplung für ein Elektrofahrzeug, die umfasst:
ein Nabengehäuse (8), das sich in einer Mitte eines Rades (2) befindet, sich mit dem Rad (2) dreht und über ein Lagerungselement (12) von einer festen Achse getragen wird,
wobei das Nabengehäuse (8) einen Elektromotor (16) aufnimmt, der das Nabengehäuse (8) dreht,
ein inneres Dreh-Element (17), das mit dem Nabengehäuse (8) um eine Achse (36) herum gedreht werden kann,
eine Reduziereinrichtung (19), die eine Drehgeschwindigkeit einer Ausgangswelle (18) des Elektromotors (16) reduziert und eine Drehung der Ausgangswelle (18) zu dem inneren Dreh-Element (17) überträgt, und
eine Freilaufkupplung (20), die eine Drehung des inneren Drehelementes (17) zu dem Nabengehäuse (8) überträgt, jedoch eine Drehung des Nabengehäuses (8) nicht zu dem inneren Drehelement (17) überträgt,
wobei das innere Drehelement (17) ein ringförmiges Innenzahnrad (26) und einen Zahnradträger (30) enthält und das ringförmige Innenzahnrad (26) abnehmbar an dem Zahnradträger (30) angebracht ist,
der Zahnradträger (30) über ein anderes Lagerungselement (29) drehbar von der festen Achse (6) getragen wird,
die Reduziereinrichtung (19) ein Sonnenrad (25), das durch die Ausgangswelle (18) des Elektromotors (16) gedreht wird, sowie ein Planetenrad (27) enthält, das mit dem Sonnenrad (25) und dem Innenzahnrad (26) in Eingriff ist,
die Freilaufkupplung (20) ein erstes Eingriffselement (31), das sich an einem Außenumfang des Innenzahnrades (26) befindet, und ein zweites Eingriffselement (32) enthält, das sich in dem Nabengehäuse (8) befindet,
das zweite Eingriffselement (32) so angeordnet ist, dass es das Innenzahnrad (26) in einer radialen Richtung von außen umschließt, und
das erste Eingriffselement (31) mit dem zweiten Eingriffselement (32) in einer Drehrichtung in Eingriff ist, in der die Drehung des inneren Dreh-Elementes (17) auf das Nabengehäuse (8) übertragen wird, jedoch mit dem zweiten Eingriffselement (32) in einer zu der einen Drehrichtung entgegengesetzten Drehrichtung nicht in Eingriff ist.

2. Nabenvorrichtung (3) mit Kupplung für ein Elektrofahrzeug nach Anspruch 1, wobei das erste Eingriffselement (31) eine Sperrklinke ist, und
das zweite Eingriffselement (32) ein ringförmiges Sperrrad ist.

3. Elektrofahrrad, das die Nabenvorrichtung (3) mit Kupplung nach Anspruch 1 oder 2 umfasst.

## Revendications

1. Dispositif de moyeu (3) avec embrayage pour un véhicule électrique, comprenant :
un carter de moyeu (8) logeant un moteur électrique (16) qui fait tourner le carter de moyeu (8),
un élément interne tournant (17) pouvant tourner avec le carter de moyeu (8) autour d'un axe (36),
un dispositif de décélération (19) qui réduit la vitesse de rotation de l'arbre de sortie (18) du moteur électrique (16) et transmet la rotation de l'arbre de sortie (18) à l'élément interne tournant (17), et
un embrayage unidirectionnel (20) qui transmet la rotation de l'élément interne tournant (17) au carter de moyeu (8) mais ne transmet pas la rotation du carter de moyeu (8) à l'élément interne tournant (17),
dans lequel l'élément interne tournant (17) inclut un pignon interne annulaire (26) et un support de pignons (30), le pignon interne annulaire (26) étant fixé au support de pignons (30) tout en pouvant s'en détacher,
dans lequel le support de pignons (30) est supporté avec une possibilité de rotation par l'essieu fixe (6) grâce à un autre élément formant pallier (29),
le dispositif de décélération (19) inclut une roue solaire (25) mise en rotation par l'arbre de sortie (18) du moteur électrique (16), ainsi qu'un train planétaire (27) en prise avec la roue solaire (25) et le pignon interne (26) ,
l'embrayage unidirectionnel (20) inclut un premier élément de mise en prise (31) prévu sur la périphérie externe du pignon interne (26) et un second élément de mise en prise (32) prévu dans le carter de moyeu (8),
le second élément de mise en prise (32) est disposé de sorte à entourer le pignon interne (26) depuis l'extérieur dans une direction radiale, et
le premier élément de mise en prise (31) est engrené avec le second élément de mise en prise (32) dans une première direction de rotation permettant de transmettre la rotation de l'élément interne tournant (17) au carter de moyeu (8) mais n'est pas engrené avec l'élément de mise en prise (32) dans la direction de rotation opposée à la première direction de rotation.

2. Dispositif de moyeu (3) avec embrayage pour un véhicule électrique selon la revendication 1, dans lequel le premier élément de mise en prise (31) est un doigt d'encliquetage, et
le second élément de mise en prise (32) est un engrenage annulaire de cliquet.

3. Bicyclette électrique comprenant le dispositif de moyeu (3) avec embrayage conforme aux revendications 1 ou 2.
